# EUROPÄISCHE PATENTSCHRIFT

(11) **EP 0 653 101 B1**
(45) Veröffentlichungstag und Bekanntmachung des Hinweises auf die Patenterteilung: **25.02.1998**
(21) Anmeldenummer: 93915905.9
(22) Anmeldetag: 14.07.1993
(51) Int. Cl.: H01H 25/06, H01H 19/62

(54) **SCHALTER FÜR ELEKTRISCH ANGETRIEBENE GERÄTE**
SWITCH FOR ELECTRICALLY OPERATED DEVICES
COMMUTATEUR POUR APPAREILS A COMMANDE ELECTRIQUE

(30) Priorität: 30.07.1992 DE 4225153
(43) Veröffentlichungstag der Anmeldung: 17.05.1995
(73) Patentinhaber: Braun Aktiengesellschaft, Frankfurt am Main (DE)
(72) Erfinder: BÖRGER, Georg, D-61449 Steinbach (DE); KAMPRATH, Karl-Heinz, D-65207 Wiesbaden (DE)
(86) Internationale Anmeldenummer: EP9301843
(87) Internationale Veröffentlichungsnummer: WO9403912

(56) Entgegenhaltungen:
- EP-A- 0 071 207
- DE-B- 1 230 890
- US-A- 3 493 696

## Beschreibung

Die Erfindung betrifft einen Schalter für elektrisch angetriebene Geräte, insbesondere für Haushaltsgeräte, mit einer drehbaren Schaltwelle, die die Schaltbewegung von einem Drehgriff auf einen Schaltkontakt überträgt, wobei die Schaltwelle eine Längsbohrung aufweist, in der ein Schaltstift axial bewegbar angeordnet ist, der mit einem Ende gegen eine Rückstellkraft tiefer in die Schaltwelle hineindrückbar ist.

Ein derartiger Schalter ist bereits aus der DE-U-69 47 257 bekannt. Bei diesem Schalter werden sowohl für den Dauereinschaltbetrieb (Drehschalter) wie für den Kurzzeitschaltbetrieb (Druckschalter) getrennt voneinander im Gehäuse angeordnete Schaltkontakte benötigt, von denen der Drehschalter zum Einschalten eines Scheibenwischers eines Kraftfahrzeuges und der Druckschalter zum kurzzeitigen Einschalten einer Pumpe einer Scheibenwaschanlage dient.

Weiterhin ist aus der EP 0 081 874 B1 ein Schalter bekannt, bei dem verschiedene Schaltfunktionen durch Drehen des Drehgriffs in unterschiedliche Schaltstellungen erreicht werden können. Dies ist für Schaltfunktionen zum Dauerbetrieb zweckmäßig, da die jeweilige Betriebsart an der Stellung des Drehgriffs ablesbar ist. Bei einer zum Kurzzeitbetrieb vorgesehenen Schaltfunktion, bei der der Drehgriff gegen ein Rückstellmoment in der Einschaltstellung gehalten werden muß, ist die Betätigung eines Drehgriffs weniger bequem. Für das Schalten eines Kurzzeitbetriebs werden vielmehr Drucktasten bevorzugt. Der bekannte Schalter ist außerdem mit einer Verriegelung versehen, die den Drehgriff in der Ausschaltstellung sperrt, solange der Deckel des Haushaltsgeräts nicht geschlossen ist. Die Verriegelung weist einen zweiarmigen Hebel auf, der durch Schließen des Deckels in eine Entriegelungsstellung schwenkbar ist, in der der Schater gedreht werden kann. Ist der Antriebsmotor des Geräts eingeschaltet, so wird über den dann gesperrten Hebel der Deckel in seiner Schließstellung arretiert, so daß er während des Betriebs des Haushaltsgeräts nicht abgenommen werden kann.

Der Erfindung liegt die Aufgabe zugrunde, einen Schalter der eingangs genannten Art zu schaffen, bei dem sowohl der Dauerbetriebsschalter wie der Kurzzeitbetriebsschalter den gleichen Schaltkontakt betätigen. Dabei soll der Schalter einfach in seinem Aufbau, leicht montierbar und kostengünstig herstellbar sein.

Erfindungsgemäß wird diese Aufgabe durch die Merkmale des Patentanspruchs 1 gelöst. Der erfindungsgemäße Schalter ermöglicht auf einfache Weise durch Niederdrücken des Schaltstifts das Einschalten des elektrischen Geräteantriebs zum Zwecke eines Kurzzeitbetriebs, wobei der Geräteantrieb so lange eingeschaltet bleibt, solange der Schaltstift durch die äußere Krafteinwirkung in der niedergedrückten Position gehalten wird. Die übrigen Schaltvorgänge wie Dauer- oder Intervallbetrieb oder Drehrichtungsumkehr können in bewährter Weise mit Hilfe des Drehgriffs über die Schaltwelle geschaltet werden. Die erfindungsgemäße Ausgestaltung des Schalters hat den Vorteil, daß mit Hilfe des Schaltstifts der gleiche Schaltkontakt geschaltet werden kann, der durch das Drehen der Schaltwelle geschaltet wird. Ein zusätzlicher Schaltkontakt zum Einschalten des Geräteantriebs im Kurzzeitmodus ist daher entbehrlich.

Zur Bildung des Übertragungselements und der Umlenkung einer axialen in eine radiale Bewegung sind die Merkmale des Patentanspruchs 2 vorgesehen. Die Ausgestaltung der Schaltwelle und des Schaltstiftes ist hierdurch einfach herstellbar und ermöglicht eine reibungsarme Übertragung der Axialbewegung des Schaltstifts in eine radiale Schaltbewegung. Zudem wird durch die federnde Zunge eine Rückstellkraft erzeugt, die den Schaltstift nach einer Betätigung in seine Ausgangslage zurückbewegt. Zur Erzeugung der Rückstellkraft nach Anspruch 3 kann zusätzlich eine Druckfeder vorgesehen sein, die zwischen einer Anlagefläche des Schaltstifts und einer Stufe in der Längsbohrung der Schaltwelle angeordnet ist.

Eine Arretierung des Schaltstifts in der Längsbohrung der Schaltwelle kann auf einfache Weise dadurch erreicht werden, daß der Schaltstift an seiner Außenseite Rasthaken aufweist, die in Ausnehmungen in der Wand der Schaltwelle einrastbar sind und den Schaltstift entgegen der Rückstellkraft der Druckfeder in seiner Neutralstellung festhalten. Der Schaltstift kann eine Bohrung haben, in die sich die Druckfeder hinein erstreckt. Hierdurch läßt sich bei geringer axialer Baulänge der Schaltwelle und des Schaltstifts eine genügend große Länge der Druckfeder erzielen.

Zum Betätigen des Schaltkontakts mit Hilfe der Schaltwelle ist auf der Mantelfläche der Schaltwelle ein Schaltnocken vorgesehen, der durch eine Drehung der Schaltwelle gegen den Schaltkontakt bewegbar ist. Sollen mit der Schaltwelle mehrere Schaltvorgänge ausführbar sein, so sind entsprechend mehrere Schaltnocken vorgesehen. Der erfindungsgemäße Schalter kann auch mit einer Verriegelung versehen sein, die sicherstellt, daß der elektrische Geräteantrieb in Betrieb gesetzt werden kann, wenn eine vorgesehene Schutzvorrichtung, beispielsweise der Behälterdeckel eines Entsafters, ordnungsgemäß geschlossen ist. Es ist hierzu vorgesehen, daß die Schaltwelle und der Schaltstift in ihrer Neutralstellung, in der der Geräteantrieb ausgeschaltet ist, durch einen Riegel sperrbar sind und daß der Riegel nur durch das Schließen einer Schutzvorrichtung in eine Entriegelungstellung bewegbar ist, in der die Schaltwelle und der Schaltstift zur Ausführung von Schaltbewegungen frei bewegbar sind. Um zu verhindern, daß die Schutzvorrichtung bei eingeschaltetem Geräteantrieb gelöst werden kann, kann weiterhin vorgesehen sein, daß die Schutzvorrichtung in der Entriegelungsstellung durch den Riegel gegen Lösen gesperrt ist. Eine einfache bauliche Ausgestaltung eines verriegelbaren Schalters kann dadurch erreicht werden, daß der Riegel in der Verriegelungsstellung radial in miteinander fluchtende Öffnungen in der Schaltwelle und dem Schaltstift eingreift und daß die Öffnungen in der Entriegelungsstellung durch eine Schaltbewegung der Schaltwelle oder des Schaltstifts aus dem Bewegungsbereich des Riegels herausbewegbar sind, so daß der Riegel durch die Schaltwelle oder den Schaltstift daran gehindert ist, in die Verriegelungsstellung zurückzukehren. Der Riegel wird somit auf einfache Weise in der Entriegelungsstellung gesperrt, wenn der Geräteantrieb eingeschaltet ist und ermöglicht dadurch auch eine Sicherung der Schutzvorrichtung gegen Lösen bei eingeschaltetem Geräteantrieb.

Der Riegel kann durch einen drehbar gelagerten, zweiarmigen Hebel gebildet sein, dessen einer Hebelarm einen tangential zur Drehachse des Hebels ausgerichteten Zapfen trägt, der in die Öffnungen in der Schaltwelle und dem Schaltstift eingreift und dessen anderer Hebelarm an seinem Ende eine Kupplungsgabel aufweist, die mit einem Kupplungszapfen der Schutzvorrichtung zusammenwirkt und diesen in der Entriegelungsstellung umgreift.

Eine weitere Ausgestaltung des Schalters, die sich gut abdichten und leicht reinigen läßt, kann darin bestehen, daß der Drehgriff eine Griffscheibe mit einer zentralen Öffnung aufweist, aus der das Ende des Schaltstifts herausragt, und daß die Öffnung in der Griffscheibe mit einer elastisch verformbaren Kappe verschlossen ist, die das Ende des Schaltstifts bedeckt.

Nachfolgend wird ein Ausführungsbeispiel der Erfindung näher erläutert, das in der Zeichnung dargestellt ist. Es zeigen:
- Fig. 1: einen Längsschnitt durch einen in das Gehäuse der Antriebseinheit einer Küchenmaschine eingebauten Schalter nach der Erfindung,
- Fig. 2: eine Querschnitt durch die Schaltwelle in Verbindung mit einer Darstellung der Schaltkontakte und des Schaltstifts des Schalters gemäß Figur 1 und
- Fig. 3: eine Ansicht der Schaltwelle in axialer Richtung in Verbindung mit einem Querschnitt durch die Schaltwelle und den Schaltstift und einer Ansicht des Riegels des Schalters gemäß Figur 1.

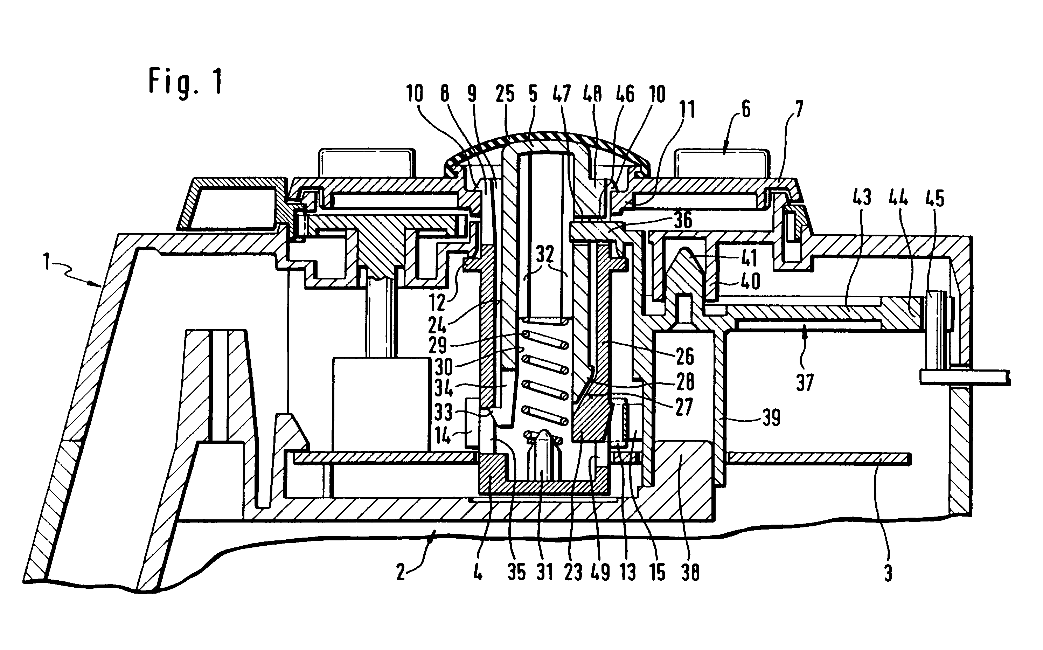

Figur 1 zeigt einen Abschnitt des Gehäuses 1 einer elektrischen Antriebseinheit einer Küchenmaschine zum Zubereiten von Speisen. Das Gehäuse 1 enthält einen Schalter 2, der eine Platine 3, eine Schaltwelle 4, einen Schaltstift 5 und einen Drehgriff 6 mit einer Griffscheibe 7 umfaßt. Auf der Platine 3 sind Schaltkontakte angeordnet, die durch die Schaltwelle 4 oder den Schaltstift 5 betätigbar sind, um dadurch den Antriebsmotor der Küchenmaschine ein- oder auszuschalten. Die Schaltwelle 4 ist als zylindrische Hülse ausgebildet und vorzugsweise aus einem harten Kunststoff hergestellt. Das Befestigungsende der Schaltwelle 4 ist durch mehrere Längsschlitze 8 in einzelne Segmente 9 unterteilt, die an ihren freien Enden nach außen vorspringende Haken 10 aufweisen. Die Schaltwelle 4 ist mit den Segmenten 9 in die Öffnung eines Ringbunds 11 der Griffscheibe 7 eingerastet, wobei die Haken 10 den Ringbund 11 übergreifen und dadurch die Griffscheibe 7 auf der Außenseite des Gehäuses 1 festhalten. Im Gehäuse 1 ist die Schaltwelle 4 in Bohrungen in der Gehäusewand und in der Platine 3 gelagert und in axialer Richtung nach außen wird sie durch einen Bund 12 gehalten, der an der Innenseite des Gehäuses 1 anliegt. Zur Ubertragung der Drehkraft von dem Drehgriff 6 auf die Schaltwelle 4 weist der Ringbund 11 radial nach innen gerichtete Vorsprünge auf, die in die Längsschlitze 8 eingreifen. Nach außen sind das Befestigungsende der Schaltwelle 4 und der aus diesem herausragende Schaltstift 5 mit einer Kappe 25 aus elastomerem Werkstoff abgedeckt, die an der Griffscheibe 7 befestigt ist.

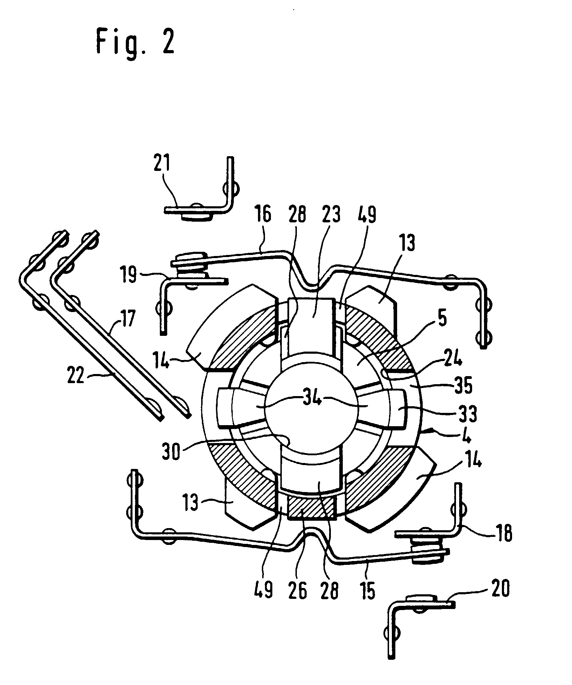

Unmittelbar neben der Platine 3 weist die Schaltwelle 4, wie vor allem aus Figur 2 zu ersehen, auf ihrer Außenseite vier Schaltnocken 13, 14 auf, wobei zwei Schaltnocken 13 und zwei Schaltnocken 14 jeweils symmetrisch in Bezug auf die Drehachse der Schaltwelle 4 angeordnet sind. Durch die Schaltnocken 13, 14 sind als Federzungen ausgebildete Schaltkontakte 15, 16, 17 bewegbar. In der in Figur 2 dargestellten Ruhestellung liegen die Schaltkontakte 15, 16 an einem Ruhekontakt 18 bzw. 19 an und der Schaltkontakt 17 ist offen. Durch eine Drehung der Schaltwelle 4 im Uhrzeigersinn bezogen auf die Darstellung in Figur 2 werden lediglich die Schaltkontakte 15, 16 geschaltet, wobei sie von den Ruhekontakten 18, 19 abgehoben und an Arbeitskontakte 20, 21 gedrückt werden. Wird die Schaltwelle 4 entgegen dem Uhrzeigersinn gedreht, so wird mit den Schaltkontakten 15, 16 auch der Schaltkontakt 17 geschaltet, wobei er an einen durch eine Federzunge gebildeten Gegenkontakt 22 gedrückt wird. Die Schaltkontakte 15, 16 sind zum Einschalten des Antriebsmotors der Küchenmaschine vorgesehen, wobei sie in ihrer Ruhestellung eine Bremsschaltung und in ihrer Arbeitsstellung eine Antriebsschaltung aktivieren. Durch Schalten des Schaltkontakts 17 wird zusätzlich eine Intervallschaltung wirksam, die den eingeschalteten Antriebsmotor in vorgegebenen Zeitintervallen ab- und wieder anschaltet.

Um die Schaltkontakte 15, 16 für einen Kurzzeitbetrieb über eine drucktastenartige Betätigung einschalten zu können, weist die Schaltwelle 4 zwischen den festen Schaltnocken 13, 14 radial bewegliche Schaltnocken 23 auf, die durch den in der Längsbohrung 24 der Schaltwelle 4 axial verschiebbar angeordneten Schaltstift 5 in radialer Richtung gegen die Schaltkontakte 15, 16 bewegbar sind. Die Schaltnocken 23 sind an den freien Enden von Federzungen 26 ausgebildet, die aus durch Längsschlitze 49 an ihren Längsseiten von der Schaltwelle 4 abgetrennten Wandabschnitten der Schaltwelle 4 bestehen. Die Schaltnocken 23 ragen nach innen in die Längsbohrung 24 hinein und weisen auf der Innenseite geneigte Gleitflächen 27 auf, denen entsprechend geneigten Rampen 28 an dem Schaltstift 5 gegenüberliegen. Wird der Schaltstift 5 nach unten in die Längsbohrung 24 hineingedrückt, so verdrängen die Rampen 28 die Schaltnocken 23 radial nach außen, wobei diese mit ihren Gleitflächen 27 an den Rampen 28 entlanggleiten. Die Außenseite der Schaltnocken 23 gelangt hierbei in Eingriff mit den Schaltkontakten 15, 16 und bewegt diese an die Arbeitskontakte 20, 21. Dieser Schaltzustand bleibt nur so lange bestehen, solange durch äußere Krafteinwirkung der Schaltstift 5 gegen eine Rückstellkraft in die Schaltwelle 4 hineingedrückt wird. Die Rückstellkraft setzt sich aus den Federkräften der Schaltkontakte 15, 16, der Federzungen 26 und der Kraft einer Druckfeder 29 zusammen, die in einer Bohrung 30 des Schaltstifts 5 angeordnet ist und sich über einen Dorn 31 am Boden der Schaltwelle 4 und über Anschlagrippen 32 am Schaltstift 5 abstützt. In der Lösestellung wird die Lage des Schaltstifts 5 durch Rasthaken 33 bestimmt, die an durch die Wand des Schaltstifts 5 gebildeten Federzungen 34 angeordnet sind und in Aussparungen 35 in der Schaltwelle 4 eingreifen.

Damit der Schalter 2 nicht betätigt werden kann, wenn der Arbeitsbehälter der Küchenmaschine geöffnet und das darin befindliche Arbeitswerkzeug zugänglich ist, ist der Schalter 2 durch einen Riegel 36 in seiner Neutralstellung, in der der Antriebsmotor ausgeschaltet ist, gesperrt. Der Riegel 36 ist an einem zweiarmigen Hebel 37 angeordnet, der um eine zur Schaltwelle 4 parallele Achse schwenkbar gelagert ist. Die Lagerung besteht aus einem Zapfen 38, der in die Bohrung einer mit dem Hebel 37 verbundenen Hülse 39 eingreift und aus einer Hülse 40, die einen Lagerzapfen 41 am Hebel 37 umgreift. An dem einen Hebelarm 42 des Hebels 37 ist der Riegel 36 befestigt. Der andere Hebelarm 43 des Hebels 37 weist an seinem Ende eine Kupplungsgabel 44 auf, in die ein, z.B. an dem Deckel des Arbeitsbehälters der Küchenmaschine angeordneter Zapfen 45 eingreift, wenn der Arbeitsbehälter mit dem Deckel verschlossen wird.

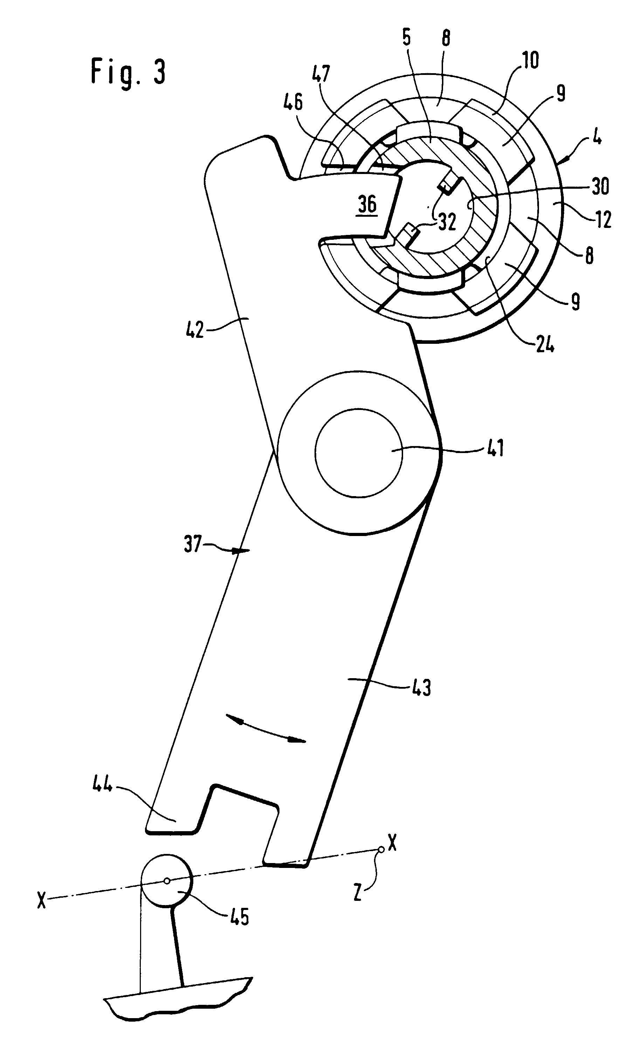

Der Riegel 36 greift in radialer Richtung in miteinander fluchtende Öffnungen 46, 47 in der Schaltwelle 4 und in dem Schaltstift 5 ein und verhindert dadurch, daß die Schaltwelle 4 gedreht und der Schaltstift 5 niedergedrückt werden kann. Wird der Arbeitsbehälter der Küchenmaschine mit seinem Deckel verschlossen, so wird der Zapfen 45 in Figur 3 der Linie X-X bewegt, bis er sich an der Stelle Z befindet. Hierbei greift der Zapfen 45 in die Kupplungsgabel 44 ein und schwenkt den Hebel 37 entgegen dem Uhrzeigersinn so weit, daß der Riegel 36 aus den Öffnungen 46, 47 heraustritt. Hierdurch ist die Sperrung der Schaltwelle 4 und des Schaltstifts 5 aufgehoben und der Antriebsmotor kann wahlweise entweder durch Drehen der Schaltwelle 4 an dem Drehgriff 6 oder durch Niederdrücken des Schaltstifts 5 eingeschaltet werden. Wird die Schaltwelle 4 in eine Schaltstellung gedreht, so gelangt anstelle der Öffnung 46 die Wand der Schaltwelle 4 vor die Stirnfläche des Riegels 36 und hindert diesen daran, in seine Verriegelungsstellung zurückzukehren. Der Hebel 37 wird somit in der Stellung gesperrt, in der er sich bei vollständig geschlossenem Deckel befindet. In dieser Stellung umgreift die Kupplungsgabel 44 den Zapfen 45 so weit, daß der Zapfen 45 nicht mehr aus der Kupplungsgabel 45 heraustreten kann. Durch die Sperrung des Hebels 37 wird daher auch der Zapfen 45 in der Schließstellung des Deckels festgehalten und ein Öffnen des Deckels verhindert. Auf diese Weise ist sichergestellt, daß bei eingeschaltetem Antriebsmotor der Arbeitsbehälter nicht versehentlich geöffnet werden kann.

Auch beim kurzzeitigen Anschalten des Antriebsmotors durch Niederdrücken des Schaltstifts 5 erfolgt eine Sperrung des Hebels 37 in der Entriegelungsstellung. Hierzu ist auf der Außenseite des Schaltstifts 5 eine an die Öffnung 47 angrenzende Rippe 48 vorgesehen, die beim Niederdrücken des Schaltstifts 5 vor den aus beiden Öffnungen 46, 47 herausbewegten Riegel 36 gelangt und dadurch den Riegel 36 und den Hebel 37 in dieser Lage arretiert.

## Patentansprüche

1. Schalter für elektrisch angetriebene Geräte, insbesondere für Haushaltsgeräte, mit einer drehbaren Schaltwelle (4), die die Schaltbewegung von einem Drehgriff (6) auf einen Schaltkontakt (15, 16) überträgt, wobei die Schaltwelle (4) eine Längsbohrung (24) aufweist, in der ein Schaltstift (5) axial bewegbar angeordnet ist, der mit einem Ende gegen eine Rückstellkraft tiefer in die Schaltwelle (4) hineindrückbar ist,
**dadurch gekennzeichnet,**
daß an der Schaltwelle (4) ein Übertragungselement (23) ausgebildet ist, das eine axiale Bewegung des Schaltstifts (5) in eine radiale Schaltbewegung umsetzt, die in Ruhestellung des Schalters (2) auf den Schaltkontakt (15, 16) übertragen wird.

2. Schalter nach Anspruch 1,
**dadurch gekennzeichnet,**
daß das Übertragungselement (23) Teil einer an der Schaltwelle (4) ausgebildeten Federzunge (26) ist, die aus durch Längsschlitze (49) an ihren Seiten von der Schaltwelle (4) abgetrennten Wandabschnitten besteht und daß der Schaltstift (5) eine zu seiner Längsachse geneigte Rampe (28) aufweist, der eine als weitere Rampe an dem Schaltnocken (23) ausgebildete Gleitfläche (27) gegenüberliegt, so daß bei axialer Verschiebung des Schaltstiftes (5) der Schaltnocken (23) radial nach außen gegen den Schaltkontakt (15, 16) bewegbar ist.

3. Schalter nach Anspruch 1,
**dadurch gekennzeichnet,**
daß die Rückstellkraft von einer Druckfeder (29) erzeugt wird, die zwischen Anlageflächen (31, 32) des Schaltstifts (5) und der Schaltwelle (4) angeordnet ist.

4. Schalter nach Anspruch 3,
**dadurch gekennzeichnet,**
daß der Schaltstift (5) eine Längsböhrung (30) hat, in die sich die Druckfeder (29) hinein erstreckt.

5. Schalter nach einem der vorhergehenden Ansprüche,
**dadurch gekennzeichnet,**
daß auf der Mantelfläche der Schaltwelle (4) ein Schaltnocken (13, 14) vorgesehen ist, der durch eine Drehung der Schaltwelle (4) gegen den Schaltkontakt (15, 16, 17) bewegbar ist.

6. Schalter nach einem der vorhergehenden Ansprüche,
**dadurch gekennzeichnet,**
daß der Schaltstift (5) an seiner Außenseite Rasthaken (33) aufweist, die in Ausnehmungen (35) in der Wand der Schaltwelle (4) einrastbar sind und den Schaltstift (5) entgegen der Rückstellkraft in seiner Neutralstellung festhalten.

7. Schalter nach einem der vorhergehenden Ansprüche,
**dadurch gekennzeichnet,**
daß die Schaltwelle (4) und der Schaltstift (5) in ihrer Neutralstellung, in der der Geräteantrieb ausgeschaltet ist, durch einen Riegel (36) sperrbar sind, wobei der Riegel (36) nur durch das Schließen einer Schutzvorrichtung (45) in eine Entriegelungsstellung bewegbar ist, in der die Schaltwelle (4) und der Schaltstift (5) zur Ausführung von Schaltbewegungen frei bewegbar sind.

8. Schalter nach Anspruch 7,
**dadurch gekennzeichnet,**
daß die Schutzvorrichtung (45) in der Entriegelungsstellung des Schalters (2) durch den Riegel (36) gegen Lösen gesperrt ist.

9. Schalter nach einem der Ansprüche 7 oder 8,
**dadurch gekennzeichnet,**
daß der Riegel (36) in der Verriegelungsstellung radial in miteinander fluchtende Öffnungen (46, 47) in der Schaltwelle (4) und dem Schaltstift (5) eingreift und daß die Öffnungen (46, 47) in der Entriegelungsstellung durch eine Schaltbewegung der Schaltwelle (4) oder des Schaltstifts (5) aus dem Bewegungsbereich des Riegels (36) herausbewegbar sind, so daß der Riegel (36) durch die Schaltwelle (4) oder den Schaltstift (5) daran gehindert ist, in die Verriegelungsstellung zurückzukehren.

10. Schalter nach einem der Ansprüche 7 bis 9,
**dadurch gekennzeichnet,**
daß der Riegel (36) einen drehbar gelagerten, zweiarmigen Hebel (37) aufweist, dessen einer Hebelarm (42) einen tangential zur Drehachse des Hebels (37) ausgerichteten Riegel (36) trägt und dessen anderer Hebelarm (43) an seinem Ende eine Kupplungsgabel (44) aufweist, die mit einem Kupplungszapfen (45) der Schutzvorrichtung zusammenwirkt und diesen in der Entriegelungsstellung umgreift.

11. Schalter nach einem der vorhergehenden Ansprüche,
**dadurch gekennzeichnet,**
daß der Drehgriff (6) eine Griffscheibe (7) mit einer zentralen Öffnung aufweist, aus der das Ende des Schaltstifts (5) herausragt, und daß die Öffnung in der Griffscheibe (7) mit einer elastisch verformbaren Kappe (25) verschlossen ist, die das Ende des Schaltstifts (5) bedeckt.

## Claims

1. A switch for electrically powered apparatus, in particular for domestic appliances, with a rotary actuating shaft (4) transmitting the switching operation from a rotary handle (6) to a switch contact (15, 16), said actuating shaft (4) including a longitudinal bore (24) in which an actuating rod (5) is axially movably disposed, an end of said rod being adapted to be urged into the actuating shaft (4) for a depth of some length in opposition to a restoring force,
**characterized in that** a transmission element (23) is provided on the actuating shaft (4) for converting an axial motion of the actuating rod (5) into a radial control motion that is transmitted to the switch contact (15, 16) when the switch (2) is in the inactivated position.

2. The switch of claim 1,
**characterized in that** the transmission element (23) is part of a resilient tongue (26) disposed on the actuating shaft (4) and comprised of wall sections separated from the actuating shaft (4) by elongate slots (49) on its sides, and that the actuating rod (5) includes a ramp (28) inclined towards its longitudinal axis, opposite said ramp being a sliding surface (27) provided on the control cam (23) to act as a further ramp, so that on an axial displacement of the actuating rod (5) the control cam (23) is movable radially outwardly into engagement with the switch contact (15, 16).

3. The switch of claim 1,
**characterized in that** the restoring force is produced by a compression spring (29) seated between abutment surfaces (31, 32) of the actuating rod (5) and the actuating shaft (4).

4. The switch of claim 3,
**characterized in that** the actuating rod (5) is provided with a longitudinal bore (30) into which the compression spring (29) extends.

5. The switch as claimed in any one of the preceding claims,
**characterized in that** a control cam (13, 14) is provided on the circumferential surface of the actuating shaft (4), said cam being movable into engagement with the switch contact (15, 16, 17) by rotation of the actuating shaft (4).

6. The switch as claimed in any one of the preceding claims,
**characterized in that** the actuating rod (5) has on its outside detent hooks (33) adapted for locking engagement with cutouts (35) provided in the wall of the actuating shaft (4) to thereby retain the actuating rod (5) in a neutral position in opposition to the restoring force.

7. The switch as claimed in any one of the preceding claims,
**characterized in that** the actuating shaft (4) and the actuating rod (5) are lockable by a latch (36) in a neutral position in which the drive mechanism of the appliance is turned off, said latch (36) being movable into an interlock deactivated position only by the closing of a safety device (45), in which position the actuating shaft (4) and the actuating rod (5) are freely movable for performing switching motions.

8. The switch of claim 7,
**characterized in that** the latch (36) locks the safety device (45) against opening in the interlock deactivated position of the switch (2).

9. The switch of either claim 7 or claim 8,
**characterized in that** in the interlock activated position the latch (36) radially engages relatively aligned openings (46, 47) in the actuating shaft (4) and in the actuating rod (5), and that in the interlock deactivated position the openings (46, 47) are movable out of the range of motion of the latch (36) by the actuating shaft (4) or the actuating rod (5) executing a switching operation, the actuating shaft (4) or the actuating rod (5) thus preventing the latch (36) from returning to the interlock activated position.

10. The switch of claims 7 to 9,
**characterized in that** the latch (36) includes a two-armed rotary lever (37) whose one arm (42) carries a latch (36) extending tangentially to the axis of rotation of the lever (37), and whose other arm (43) carries at its end a bifurcated coupling member (44) cooperating with a coupling pin (45) of the safety device and embracing the coupling pin in the interlock deactivated position.

11. The switch as claimed in any one of the preceding claims,
**characterized in that** the rotary handle (6) includes a dial (7) having a central opening from which the end of the actuating rod (5) protrudes, and that the opening in the dial (7) is closed by an elastically deformable cap (25) covering the end of the actuating rod (5).

## Revendications

1. Commutateur pour appareils à entraînement électrique, en particulier pour des appareils ménagers, comprenant un arbre de commutateur rotatif (4) qui transmet le mouvement de commutation depuis une poignée rotative (6) vers un contact de commutation (15, 16), et l'arbre de commutateur (4) comporte un perçage longitudinal (24) dans lequel une tige de commutation (5) est agencée avec faculté de déplacement axial, ladite tige de commutation pouvant être enfoncée plus profondément dans l'arbre de commutateur (4) par une extrémité à l'encontre d'une force de rappel,
caractérisé en ce que
un élément de transmission (23) est réalisé sur l'arbre de commutateur (4), ledit élément transformant un déplacement axial de la tige de commutation (5) en un mouvement de commutation radial, lequel est transmis au contact de commutation (15, 16) dans la position de repos du commutateur (2).

2. Commutateur selon la revendication 1, caractérisé en ce que l'élément de transmission (23) est une partie d'une languette élastique (26) réalisée sur l'arbre de commutateur (4), ladite languette étant constituée par des tronçons de paroi séparés de l'arbre de commutateur (4) au moyen de fentes longitudinales (49) sur ses côtés, et en ce que la tige de commutation (5) comporte une rampe (28) inclinée vers son axe longitudinal, avec une surface de coulissement (27) réalisée à l'opposé sur la came de commutation (23) sous forme d'une autre rampe, de sorte que lors d'un déplacement axial de la tige de commutation (5), la came de commutation (23) est susceptible d'être déplacée radialement vers l'extérieur contre le contact de commutation (15, 16).

3. Commutateur selon la revendication 1, caractérisé en ce que la force de rappel est engendrée par un ressort de compression (29), lequel est agencé entre des surfaces d'appui (31, 32) de la tige de commutation (5) et l'arbre de commutateur (4).

4. Commutateur selon la revendication 3, caractérisé en ce que la tige de commutation (5) possède un perçage longitudinal (30) dans lequel s'étend le ressort de compression (29).

5. Commutateur selon l'une des revendications précédentes, caractérisé en ce qu'une came de commutation (13, 14) est prévue sur la surface enveloppe de l'arbre de commutateur (4), laquelle est déplaçable contre le contact de commutation (15, 16, 17) au moyen d'une rotation de l'arbre de commutateur (4).

6. Commutateur selon l'une des revendications précédentes, caractérisé en ce que la tige de commutation (5) présente des crochets d'enclenchement (33) sur sa face extérieure, lesquels sont susceptibles de s'enclencher dans des évidements (35) dans la paroi de l'arbre de commutateur (4), et retiennent fermement la tige de commutation (5) dans sa position neutre à l'encontre de la force de rappel.

7. Commutateur selon l'une des revendications précédentes, caractérisé en ce que l'arbre de commutateur (4) et la tige de commutation (5) sont susceptibles d'être verrouillés dans leur position neutre, dans laquelle l'entraînement de l'appareil est coupé, au moyen d'un verrou (36), ledit verrou (36) ne pouvant être déplacé que par fermeture d'un dispositif protecteur (45) jusque dans une position de déverrouillage dans laquelle l'arbre de commutateur (4) et la tige de commutation (5) sont librement mobiles pour exécuter des mouvements de commutation.

8. Commutateur selon la revendication 7, caractérisé en ce que le dispositif protecteur (45) est verrouillé à l'encontre d'un détachement au moyen du verrou (36) dans la position de déverrouillage du commutateur (2).

9. Commutateur selon l'une ou l'autre des revendications 7 et 8, caractérisé en ce que le verrou (36) s'engage dans la position de verrouillage radialement dans des ouvertures mutuellement alignées (46, 47) dans l'arbre de commutateur (4) et dans la tige de commutation (5), et en ce que les ouvertures (46, 47) peuvent être déplacées hors de la zone de déplacement du verrou (36) dans la position de déverrouillage et par un déplacement de commutation de l'arbre de commutateur (4) ou de la tige de commutation (5), de sorte que le verrou (36) est empêché de retourner dans la position de verrouillage soit par l'arbre de commutateur (4) soit par la tige de commutation (5).

10. Commutateur selon l'une des revendications 7 à 9, caractérisé en ce que le verrou (36) comporte un levier à deux bras (37), monté en rotation, dont l'un des bras (42) porte un verrou (36) dirigé tangentiellement par rapport à l'axe de rotation du levier (37), et dont l'autre bras (43) comporte à son autre extrémité une fourche d'accouplement (44) qui coopère avec un tenon d'accouplement (45) du dispositif protecteur, et entoure ce tenon dans la position de déverrouillage.

11. Commutateur selon l'une des revendications précédentes, caractérisé en ce que la poignée rotative (6) comporte un disque de poignée (7) avec une ouverture centrale, hors de laquelle dépasse l'extrémité de la tige de commutation (5), et en ce que l'ouverture dans le disque de poignée (7) est refermée par un capuchon élastiquement déformable (25), lequel recouvre l'extrémité de la tige de commutation (5).
